# EUROPEAN PATENT SPECIFICATION

(11) **EP 1 173 851 B1**
(45) Date of publication and mention of the grant of the patent: **18.12.2002**
(21) Application number: 00927369.9
(22) Date of filing: 19.04.2000
(51) Int. Cl.: G11B 33/04, G11B 23/03

(54) **COMPACT DISC CARRIER**
COMPACT DISK TRÄGER
SUPPORT DE DISQUES COMPACTS

(30) Priority: 19.04.1999 GB 9908906
(43) Date of publication of application: 23.01.2002
(73) Proprietor: Dubois Limited, Corby, Northants NN17 4AP (GB)
(72) Inventor: FRASER, Anthony Henry Joseph, Corby, Northants NN17 3AB (GB); FARRAR, Peter Anthony, Rawdon, Leeds LS19 6HZ (GB)
(74) Representative: Unwin, Stephen Geoffrey
(86) International application number: GB0001376
(87) International publication number: WO00063918

(56) References cited:
- US-A- 5 154 284
- US-A- 5 558 221
- US-A- 5 748 608
- US-A- 5 887 714

## Description

The present invention relates to carriers for compact discs.

By 'compact disc', in the context of this specification, is meant not only the relatively common standard 120 mm diameter laser readable disc such as currently sold carrying, for example, pre-recorded music, computer software and data, and similar recordable discs, but also similar discs, eg DVDs, of the same size, or larger or smaller sizes such as are known for recording video, films, interactive games and other data and information.

A carrier is essential for the storage and transport of compact discs, as the data bearing surface can easily be damaged by scratching, wear etc. Where discs are sold commercially, it is usual to package the disc in a rigid plastics carrier that also includes a leaflet describing the disc. However, where discs are distributed free or very cheaply as a promotional item (for example), such carriers are excessively expensive and the disc is usually supplied in a paper or plastics sleeve.

It is also known to supply discs in a composite carrier comprising a substantially rigid member which supports the disc and a cardboard cover attached to a reverse face of the member, extending around a spine edge and over the front surface of the member to cover the disc. The card cover can be printed, avoiding the need for a leaflet. These are advantageous in that they offer better protection to the disc and can be more effectively decorated. However, they suffer from disadvantages in that (i) they are more expensive, (ii) the front cover tends to flap open, inviting damage to it and the disc, and (iii) the card used is usually relatively thick and is often folded over to give the cover sufficient weight to be self-closing.

US-A-5887714 discloses compact disk packaging constructed from cardboard in the form of a double-fold, matchbook-type cover. The double fold comprises an outer cover and a sleeve. When closed, the sleeve and the outer cover are positioned under a flap.

US-A-5887714 discloses a cardboard folded sleeve for holding a compact disc.

The present invention therefore provides a composite carrier for a compact disc comprising a generally planar member of a first material which is substantially rigid and adapted to retain a compact disk adjacent a front face thereof and an openable cover of a second material which is flexible with a first portion secured to a rear face of the generally planar member and a second portion extending around a first edge of the generally planar member and over the front face of the generally planar member for removably covering a compact disc retained on the generally planar member, the generally planar member being provided with at least one substantially rigid retaining means formed of said first material and extending substantially parallel to the plane of the generally planar member whereby by flexing the openable cover an edge thereof can be located beneath said at least one retaining means which then retains cover in a closed position.

Other features of the invention will be apparent from the following description and from the subsidiary claims of the specification.

An embodiment of the invention will now be described by way of example, with reference to the accompanying figures, in which;
Figure 1 shows a plan view from above of a carrier according to an embodiment of the invention with a cover omitted for clarity;
Figure 2 shows a section on II-II of four such carriers stacked together;
Figure 3 shows an enlarged part of figure 1 with one of the carriers removed from the stack (with the cover shown); and
Figure 4 shows an enlarged sectional view of part of a carrier at the opposite edge to that shown in Figure 3.

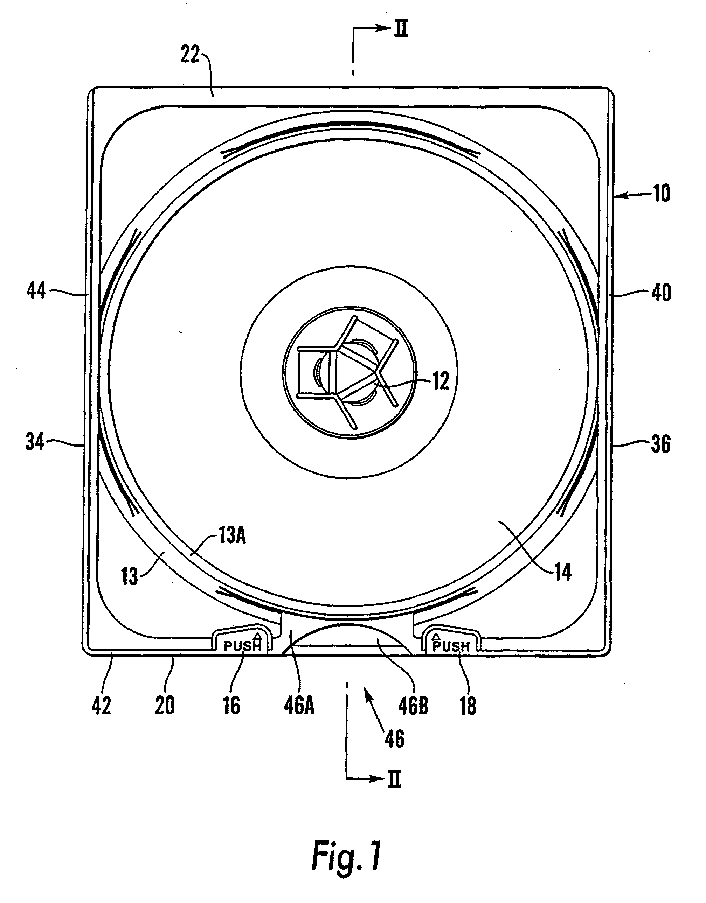

Referring to figure 1, this shows a compact disc (CD) carrier 10 with a retention device 12 at its centre to engage with the central hole of a CD. The retention device 12 is preferably of a type such as described in WO96/14636 and WO97/41563, the disclosure of which is incorporated herein, which enables the disk to be released by simply depressing the retention device whereupon the disk is ejected and is free for removal. Such a device avoids the need to prize the disk off the retention device by lifting one edge of the disk as this is not only awkward to do with one hand, whilst trying to depress the retention device at the same time, but also tends to bend the disk which may damage the disk and/or the data recorded thereon.

As described in WO96/14636 and WO97/41563, the retention device is used in conjunction with an upstand 13 around the periphery of the CD 14. This inhibits access to the periphery of the CD 14 until it has been released (whereupon it is raised slightly so the periphery can be grasped by the user). It also protects the edge of the CD and prevents it from being subject to sideways forces or movement within the plane of the CD.

A support surface 13A is provided on the radially inner side of the upstand 13 for supporting the periphery of the CD when the retention device is operated to release the CD. This facilitates a slight flexing of the centre of the disk towards the carrier 10 when the retention device is operated to release the disk so that the centre of the disk rises once it is released as it reverts to an unflexed state. This is described in greater detail in WO96/14636 and WO97/41563.

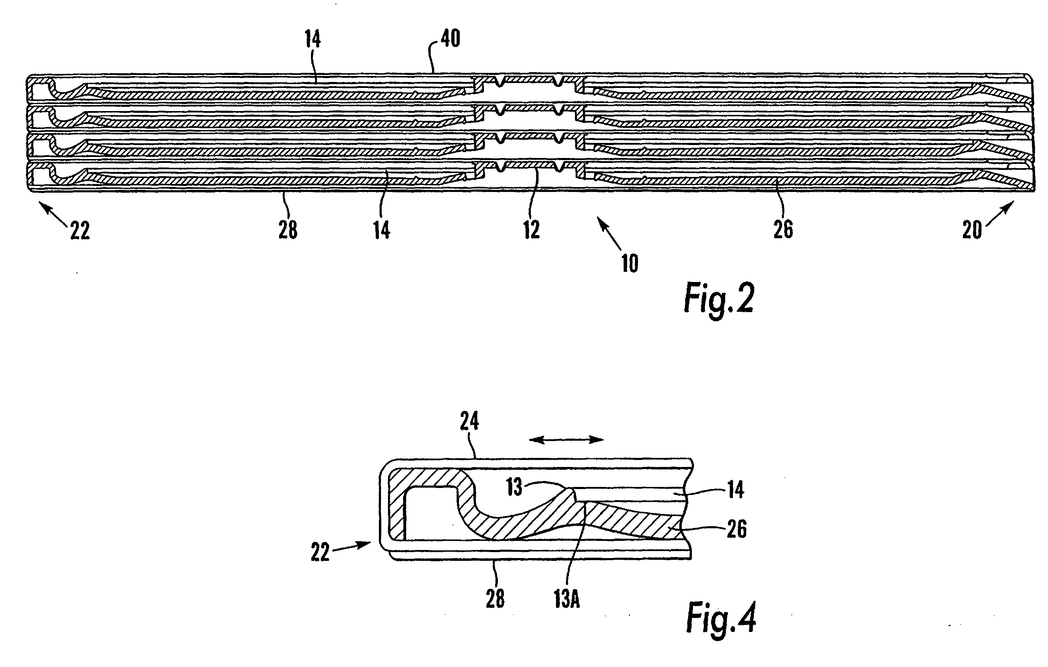

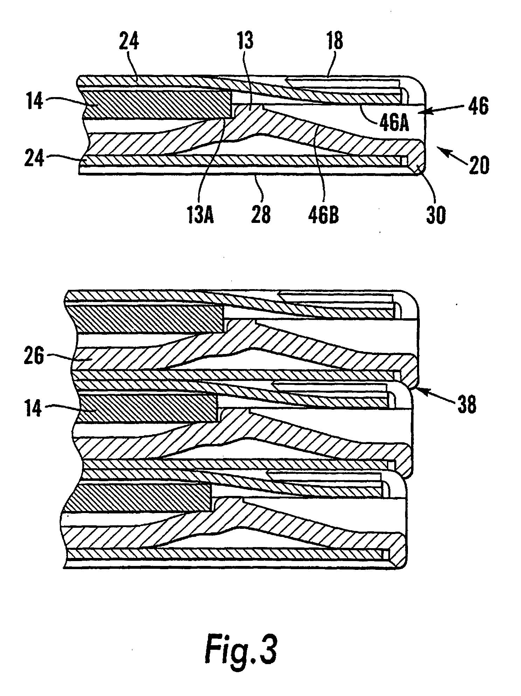

A CD 14 (see figure 2) is held by the retention device 12 and covered by a cardboard cover 24 (not shown in figures 1 or 2). A pair of lips 16, 18 are formed on an outer edge 20 of the carrier 10, being the edge opposite a spine edge 22. The lips 16, 18 extend generally within the plane of the carrier 10, approximately co-planar with the cover 24, back toward the spine edge 22. As will be described further below, an edge of the cover 24 can be fitted beneath the lips 16,18 to hold the cover 24 in a closed position. The thickness of the distal ends of the lips 16, 18 is preferably tapered so as to help guide the edge of the cover 24 under the lips, as shown in figure 3.

Figure 2 shows a section on II-II through figure 1 of four such carriers stacked together. Each carrier comprises a member 26 moulded from a suitable, substantially rigid plastics material and therefore provides adequate structural support for the CD 14. A cardboard cover 24 (see figures 3 and 4) is secured to the rear face of the member 26 (i.e. the face opposite that on which the CD is mountable), e.g. by means of adhesive, and wraps around the spine edge 22 and over the front face of the member 26.

Preferably, a set of ridges 28, 30, 32 are formed around the periphery of the underside of the member 26 on the outer edge 20 and the two side edges 34, 36 which extend between the outer edge 20 and the spine edge 22. For example, ridge 28 depends from side edge 34, and ridge 30 depends from outer edge 20. The cardboard cover 24 then lies within the space defined by the ridges 28, 30, 32, the ridges being of depth equal to or greater than the thickness of the card. The absence of a ridge on the spine edge 22 allows the cardboard cover 24 to extend around that edge as shown in figure 4.

The card may be secured to the rear face of the member 26 by any means, eg by adhesive as mentioned above or by a mechanical connection such as sliding within grooves (not shown) at the edges of the rear face.

A similar arrangement of ridges 40, 42, 44 is preferably provided on the upper surface of the member 26 (see figure 1) although these are preferably only of the same height as the thickness of the cover 24.

As shown in figures 2 and 3, when a plurality of such carriers are stacked, the ridges tend to meet at 38 as the cardboard cover 24 is thinner than the depth of the ridges. Therefore, a rigid stack is formed with contact between adjacent carriers being provided by the peripheral ridges (rather than by contact between the covers as in the prior art) so reducing the risk of damage to the covers and avoiding the need to provide very robust covers.

The ridges on the upper and lower faces of the member 26, and the lips 16, 18, also serve to protect the edges of the cover, which are particularly vulnerable to damage, from wear and tear so further avoiding the need to provide very robust cardboard or of folding the cardboard.

The ridges on the upper and/or lower faces of the member 26 are also preferably arranged so that the ridges on the upper face at least partially nest within the ridges of the lower face as shown in Figures 2 and 3 so the adjacent members 26 within a stack are held in alignment with each other.

This arrangement thus permits the use of thinner, weaker, and hence less expensive, cardboard than the prior art.

Figure 3 shows the cardboard cover 24 positioned beneath the lips 16, 18 formed on the member 26. To open the carrier, the cardboard cover 24 is drawn back until clear of the lips 16,18 and then raised. There will generally be sufficient flexibility in the cover 24 either in the area in which it curves around the spine edge 22 and/or in its ability to bow away from the front face of the member 26 to permit it to be drawn back in this manner. The process can be reversed to close the carrier. Thus, the cover 24 is held closed when desired and damage to the CD or the carrier can be avoided.

As the cover is not secured to the spine edge 22, the openable portion of the cover is permitted to be drawn back from under the lips 16, 18 by angling of the spine of the cover away from the edge 22. Thus the angle between the openable portion of the cover and the spine of the cover reduces to less than 90 degrees and the angle between the spine of the cover and the portion secured to the rear face of the member increases to greater than 90 degrees as the spine of the cover becomes angled to the vertical plane of the edge 22 (in the orientation as shown in Figure 4).

Furthermore, it is found that there is a tendency for the cover to move back to a position in which both of these angles are substantially 90 degrees, ie the position shown in Figure 4, when released. Thus, when the cover is closed and its edge directed under the lips 16, 18, there is a tendency for the openable portion of the cover to slide under and remain under the lips 16, 18 when it is released so helping the retention provided thereby to be maintained. The resilience of the cover, particularly of the folds at its spine, thus tends to urge the cover back under the lips 16,18.

The openable portion of the cover 24 may also be bowed away from the upper face of the member to help slide the edge of the cover from out beneath the lips 16, 18. With the lips 16, 18 provided on the edge 20, the cover is bowed so as to form an arc extending from the edge 22 to the edge 20 when the edge of the cover parallel to the edge 20 of the member 26 is drawn back. A similar movement occurs both in removing the edge from beneath the lips 16, 18 and when placing the edge under the lips 16, 18.

In other embodiments (not shown), lips may be provided on the side edges 34, 36 of the member 26, preferably adjacent to the edge 20, ie in the corners between the edges 34, 36 and the edge 20. In this case, the cover 24 may be drawn back by angling of the spine of the cover as described above and by bowing of the cover so as to form an arc extending from one side 34 to the other side 36. This can be done by applying pressure to the edges of the cover parallel to edges 34, 36 when the cover is to be inserted from beneath the lips. However, when the cover is to be withdrawn from beneath lips provided on the edges 34, 36, it can be bowed in this manner either by applying pressure to the edges of the cover 24 parallel to the edges 34, 36 or by simply applying pressure to the edge of the cover parallel to the edge 20 towards the spine edge 22 (as in the embodiment described above).

A locally relieved portion 46 of the member 26 on the edge 20 between the two lips 16, 18 is provided to facilitate access to the edge of the cover adjacent the points where it slides under the lips 16, 18 and so facilitate the application of pressure to the edge of the cover lying parallel to the edge 20.

The relieved portion 46 comprises a cut-out or a recessed area such as shown in Figures 1 and 3 which provides finger (or thumb) access to the edge of the cover 24. As shown in Figure 1, the relieved portion preferably has an arcuate shape when viewed from above.

A support surface 46A approximately co-planar with the disk 14 is provided around the periphery of the arcuate relieved portion 24 to support the underside of the cover immediately adjacent the cut-out and to help guide the cover whilst it is slid under the lips 16, 18 or withdrawn therefrom. When the edge of the cover is retained beneath the lips 16, 18, it is held in a slot defined by the undersides of the lips 16, 18 and the support surface 46A as shown in Figure 3.

The relieved portion has a lower surface 46B at least part of which slopes upwards from the base of the member 26 to the support surface 46A as shown in figure 3. As shown in figures 1 and 3, the lower surface 46B of the relieved portion 46 may comprise a narrow, substantially flat area immediately adjacent the edge of the member 26 and then slope upwards towards the top of the upstand 13. The surface 46B may, if desired, have a part spherical or other 3-dimensional curved form and so be shaped to correspond approximately to the shape of the tip of a user's finger or thumb. The slope of the lower surface 46B helps guide the movement of the user's finger or thumb to facilitate withdrawal of the cover from beneath the lips 16, 18 and when the cover is slid back under the lips 16, 18.

The provision of the lower surface 46B within the relieved portion 46 also helps protect the edge of the cover 24 as the surface 46B extends to the edge of the member 26 as shown in figures 1 and 3. The vulnerability of the edge of the cover 24 within the relieved portion to damage or wear is thus considerably reduced. It is therefore feasible for the cover 24 to be formed of a single layer of cardboard as it is not necessary to provide a fold at the edge of the cover to provide resistance to wear.

The CD is also not exposed to damage via the relieved portion as its periphery is protected by the upstand 13.

The. relieved portion 46 is preferably provided immediately adjacent the lips 16, 18 to optimize control of the movement of the parts of the cover 24 fitting under the lips. The locally relieved portion 46 allows the edge of the card lying therein to be both pressed down and slid backwards towards the spine edge 22 when the cover is to be opened. It also allows access for a finger (or thumb) to help guide the edge of the cover under the lips 16, 18 when the cover is to be closed. However, the support surface 46A helps prevent the edge of the cover from being distorted in a direction perpendicular to the plane of the member 26 and thus makes the edge of the cover 24 less vulnerable to damage.

Similarly, in embodiments having lips on the side edges 34, 36, locally relieved areas are preferably provided adjacent thereto to facilitate access to the relevant edges of the cover 24.

The above device thus provides an arrangement in which the cover 24 can be releasably held in a closed position. Also, the device is adapted so that a plurality of similar devices can be stacked together without damage to the cover 24.

It will of course be appreciated that the above-described embodiment is presented purely by way of example, and that many variations could be made thereto without departing from the scope of the present invention.

Although, the member 26 is shown as being substantially square, it may be rectangular or have some other shape, e.g. hexagonal or circular, and may be of some other size.

The lips 16,18 may be replaced by one or more other forms of retaining means, eg projections or flanges, under which an edge of the cover 24 can be retained.

Although the retaining means are preferably provided on an edge 20 of the member opposite the spine edge 22 they may, as mentioned above, be provided either alternatively, or additionally, on the side edges 34,36.

The retaining means is preferably substantially co-planar with the cover 24 but may also be positioned slightly above or below the plane of the cover if desired.

The cover 24 may be formed of other stiff but flexible material, e.g. a plastics sheet.

The arrangement described above enables a thinner card to be used as it is held in the closed position by the retaining means rather than its weight and the resistance to crushing forces, eg within a stack, is provided by the peripheral upstands rather than by the strength of the cover.

## Claims

1. A composite carrier for a compact disc comprising a generally planar member (26) of a first material which is substantially rigid and adapted to retain a compact disk (14) adjacent a front face thereof and an openable cover (24) of a second material which is flexible with a first portion secured to a rear face of the generally planar member (26) and a second portion extending around a first edge (22) of the generally planar member (26) and over the front face of the generally planar member (26) for removably covering a compact disc (14) retained on the generally planar member (26), the generally planar member (26) being provided with at least one substantially rigid retaining means (16, 18) formed of said first material and extending substantially parallel to the plane of the generally planar member (26) whereby by flexing the openable cover (24) an edge thereof can be located beneath said at least one retaining means (16, 18) which then retains cover (24) in a closed position.

2. A carrier as claimed in claim 1 in which the at least one retaining means (16, 18) is provided at an edge of the generally planar member (26) opposite said first edge (22).

3. A carrier as claimed in claim 1 and 2 in which the generally planar member (26) has a substantially square or rectangular shape.

4. A carrier as claimed in claim 3 in which the first edge (22) of the generally planar member (26) comprises a first edge (22) of the square or rectangular shape and the retaining means (16, 18) are provided on second and third edges (34, 36) of the square or rectangle, these edges (34, 36) being adjacent to the first edge (22) thereof.

5. A carrier as claimed in any preceding claim having two spaced apart retaining means (16, 18) provided at an edge of the generally planar member (26) opposite the said first edge (22).

6. A carrier as claimed in any preceding claim in which a locally relieved area (46) is provided in the generally planar member (26) to facilitate access to the edge of the cover (24) when the cover (24) is retained beneath the retaining means (16, 18).

7. A carrier as claimed in claims 5 and 6 in which the locally relieved area (46) is provided in a position which lies between the two spaced apart retaining means (16, 18).

8. A carrier as claimed in claim 7 in which the locally relieved area (46) has an arcuate shape when viewed from above the carrier.

9. A carrier as claimed in claim 7 or 8 in which a support surface (46A) is provided around the periphery of the relieved area (46) to support the underside of the cover (24) when the cover (24) is retained under the retaining means (16, 18).

10. A carrier as claimed in claim 9 in which the relieved area (46) has a lower surface (46B) which slopes upwardly from an edge of the generally planar member (26) towards the support surface (46A).

11. A carrier as claimed in any preceding claim in which the retaining means (16, 18) comprises one or more lips, projections or flanges.

12. A carrier as claimed in any preceding claim in which an upstand (40, 42, 44; 28, 30, 32) is provided around at least part of the peripheral edge of the upper and/or lower faces of the generally planar member (46) and is adapted such that two or more identical carriers can be stacked on each other with a spacing between the upper and lower faces of adjacent carriers.

13. A carrier as claimed in claim 12 in which the peripheral edges of the upper and lower faces are adapted such that the peripheral edges of the upper face of the carrier is shaped so as to nest, at least to some extent, within the peripheral edges of the lower face of another identical carrier, or vice versa.

14. A carrier as claimed in any preceding claim with a CD or DVD (14) retained thereon.

## Patentansprüche

1. Zusammengesetzter Träger für eine CD-Platte, umfassend ein allgemein planares Element (26) aus einem ersten Material, das im Wesentlichen starr ist und die Aufgabe hat, eine CD-Platte (14) an einer Vorderseite davon zu halten, und einen öffnungsfähigen Deckel (24) aus einem zweiten Material, das flexibel ist, von dem ein erster Abschnitt an einer Rückseite des allgemein planaren Elementes (26) befestigt ist und von dem ein zweiter Abschnitt um einen ersten Rand (22) des allgemein planaren Elementes (26) herum und über die Vorderseite des allgemein planaren Elements (26) verläuft, um eine auf dem allgemein planaren Element (26) gehaltene CD-Platte (14) entfernbar zu bedecken, wobei das allgemein planare Element (26) mit wenigstens einem im Wesentlichen starren Haltemittel (16, 18) versehen ist, das aus dem genannten ersten Material besteht und im Wesentlichen parallel zu der Ebene des allgemein planaren Elementes (26) verläuft, so dass durch Biegen des öffnungsfähigen Deckels (24) ein Rand davon unter das genannte wenigstens eine Haltemittel (16, 18) gebracht werden kann, das den Deckel (24) dann in einer geschlossenen Stellung hält.

2. Träger nach Anspruch 1, bei dem das wenigstens eine Haltemittel (16, 18) an einem Rand des allgemein planaren Elementes (26) gegenüber dem genannten ersten Rand (22) vorgesehen ist.

3. Träger nach Anspruch 1 oder 2, bei dem das allgemein planare Element (26) eine im Wesentlichen quadratische oder rechteckige Form hat.

4. Träger nach Anspruch 3, bei dem der erste Rand (22) des allgemein planaren Elementes (26) einen ersten Rand (22) der quadratischen oder rechteckigen Form umfasst und die Haltemittel (16, 18) auf dem zweiten und dem dritten Rand (34, 36) des Quadrats oder Rechtecks vorgesehen sind, wobei sich diese Ränder (34, 36) neben dem ersten Rand (22) davon befinden.

5. Träger nach einem der vorherigen Ansprüche mit zwei voneinander beabstandeten Haltemitteln (16, 18), die an einem Rand des allgemein planaren Elementes (26) gegenüber dem genannten ersten Rand (22) vorgesehen sind.

6. Träger nach einem der vorherigen Ansprüche, bei dem ein örtlich ausgesparter Bereich (46) in dem allgemein planaren Element (26) vorgesehen ist, um den Zugang zu dem Rand des Deckels (24) zu erleichtern, wenn der Deckel (24) unter den Haltemitteln (16, 18) gehalten wird.

7. Träger nach Anspruch 5 oder 6, bei dem der örtlich ausgesparte Bereich (46) in einer Position vorgesehen ist, die zwischen den beiden beabstandeten Haltemitteln (16, 18) liegt.

8. Träger nach Anspruch 7, bei dem der örtlich ausgesparte Bereich (46) - wenn von oberhalb des Trägers betrachtet - bogenförmig ist.

9. Träger nach Anspruch 7 oder 8, bei dem eine Tragfläche (46A) um den Umfang des ausgesparten Bereiches (46) vorgesehen ist, um die Unterseite des Deckels (24) zu tragen, wenn der Deckel (24) unter den Haltemitteln (16, 18) gehalten wird.

10. Träger nach Anspruch 9, bei dem der ausgesparte Bereich (46) eine Unterseite (46B) hat, die von einem Rand des allgemein planaren Elementes (26) nach oben in Richtung auf die Tragfläche (46A) geneigt ist.

11. Träger nach einem der vorherigen Ansprüche, bei dem die Haltemittel (16, 18) ein oder mehrere Lippen, Vorsprünge oder Flansche umfassen.

12. Träger nach einem der vorherigen Ansprüche, bei dem ein Aufstand (40, 42, 44; 28, 30, 32) um wenigstens einen Teil des Umfangsrandes der Ober- und/oder Unterseite des allgemein planaren Elementes (46) vorgesehen ist, der so gestaltet ist, das zwei oder mehr identische Träger übereinander gestapelt werden können, mit einem Abstand zwischen der Oberseite und der Unterseite benachbarter Träger.

13. Träger nach Anspruch 12, bei dem die Umfangsränder der Ober- und der Unterseite so gestaltet sind, dass die Umfangsränder der Oberseite des Trägers so geformt sind, dass sie wenigstens einigermaßen in den Umfangsrändern der Unterseite eines anderen identischen Trägers ruhen oder umgekehrt.

14. Träger nach einem der vorherigen Ansprüche mit einer darauf gehaltenen CD- oder DVD-Platte (14).

## Revendications

1. Un support composite pour un disque compact, comportant un élément généralement plan (26) en un premier matériau qui est sensiblement rigide et adapté pour retenir un disque compact (14) adjacent à une face antérieure de celui-ci, et un couvercle ouvrable (24) en un deuxième matériau qui est flexible, avec une première partie fixée à une face postérieure de l'élément généralement plan (26) et une deuxième partie qui s'étend autour d'un premier bord (22) de l'élément généralement plan (26) et au-dessus de la face antérieure de l'élément généralement plan (26) pour recouvrir de façon amovible un disque compact (14) retenu sur l'élément généralement plan (26), l'élément généralement plan (26) étant pourvu d'au moins un moyen de retenue sensiblement rigide (16, 18) formé à partir dudit premier matériau et qui s'étend sensiblement parallèlement au plan de l'élément généralement plan (26) de sorte que, en fléchissant le couvercle ouvrable (24), il devient possible de placer un bord de celui-ci au-dessous d'au moins un desdits moyens de retenue (16, 18), qui retient alors le couvercle (24) en une position fermée.

2. Un support selon la revendication 1, dans lequel ledit ou lesdits moyen(s) de retenue (16, 18) est/sont prévu/s sur un bord de l'élément généralement plan (26) opposé audit premier bord (22)

3. Un support selon les revendications 1 et 2, dans lequel l'élément généralement plan (26) a une forme sensiblement carrée ou rectangulaire.

4. Un support selon la revendication 3, dans lequel le premier bord (22) de l'élément généralement plan (26) comprend un premier bord (22) de la forme carrée ou rectangulaire, et les moyens de retenue (16, 18) sont prévus sur les deuxième et troisième bords (34, 36) du carré ou du rectangle, ces bords (34, 36) étant adjacents au premier bord (22) de celui-ci.

5. Un support selon l'une quelconque des revendications précédentes, ayant deux moyens de retenue (16, 18) écartés l'un de l'autre, prévus sur un bord de l'élément généralement plan (26) opposé audit premier bord (22).

6. Un support selon l'une quelconque des revendications précédentes, dans lequel une zone dépouillée localement (46) est prévue dans l'élément généralement plan (26) pour faciliter l'accès au bord du couvercle (24) lorsque le couvercle (24) est retenu sous les moyens de retenue (16, 18).

7. Un support selon les revendications 5 et 6, dans lequel la zone dépouillée localement (46) est prévue en une position qui se trouve entre les deux moyens de retenue (16, 18) écartés l'un de l'autre.

8. Un support selon la revendication 7, dans lequel la zone dépouillée localement (46) présente une forme en arc lorsque vue d'au-dessus du support.

9. Un support selon les revendications 7 ou 8 dans lequel une surface de support (46A) est prévue sur le pourtour de la zone dépouillée (46) pour supporter la face inférieure du couvercle (24) quand le couvercle (24) est retenu sous les moyens de retenue (16, 18).

10. Un support selon la revendication 9, dans lequel la zone dépouillée (46) a une surface inférieure (46B) qui forme une pente vers le haut depuis un bord de l'élément généralement plan (26) vers la surface de support (46A).

11. Un support selon l'une quelconque des revendications précédentes, dans lequel les moyens de retenue (16, 18) comprennent une ou plusieurs lèvres, saillies ou brides.

12. Un support selon l'une quelconque des revendications précédentes, dans lequel une bordure verticale (40, 42, 44 ; 28, 30, 32) est prévue autour d'une partie au moins du bord périphérique des faces supérieure et/ou inférieure de l'élément généralement plan (46) et est adaptée de sorte qu'il est possible d'empiler deux supports identiques - ou davantage - l'un sur l'autre avec un espace entre les faces supérieure et inférieure de supports adjacents.

13. Un support selon la revendication 12, dans lequel les bords périphériques des faces supérieure et inférieure sont adaptés de sorte que les bords périphériques de la face supérieure du support sont formés de sorte à s'imbriquer, jusqu'à un certain point au moins, à l'intérieur des bords périphériques de la face inférieure d'un autre support identique, ou vice versa.

14. Un support selon l'une quelconque des revendications précédentes, sur lequel est retenu un disque compact (CD) ou un DVD (14).
